# EUROPÄISCHE PATENTSCHRIFT

(11) **EP 0 588 997 B1**
(45) Veröffentlichungstag und Bekanntmachung des Hinweises auf die Patenterteilung: **26.11.1997**
(21) Anmeldenummer: 93905136.3
(22) Anmeldetag: 18.03.1993
(51) Int. Cl.: B23Q 3/06

(54) **MEHRFACHAUFSPANNVORRICHTUNG**
MULTIPLE WORKPIECE HOLDING FIXTURE
DISPOSITIF DE BLOCAGE MULTIPLE

(30) Priorität: 30.03.1992 CH 983/92
(43) Veröffentlichungstag der Anmeldung: 30.03.1994
(73) Patentinhaber: WERKZEUG- UND APPARATEBAU MOSIG HEINZ, CH-6010 Kriens (CH)
(72) Erfinder: MOSIG, Heinz, CH-6010 Kriens (CH)
(74) Vertreter: Feldmann, Clarence Paul
(86) Internationale Anmeldenummer: CH9300075
(87) Internationale Veröffentlichungsnummer: WO9319892

(56) Entgegenhaltungen:
- EP-A- 0 328 792
- WO-A-89/04236
- CH-A- 670 787
- DE-A- 3 237 705
- GB-A- 2 247 423
- US-A- 4 562 999

## Beschreibung

Die vorliegende Erfindung betrifft eine Mehrfachaufspannvorrichtung zum Aufspannen von zu bearbeiteten Werkstücken auf NC-gesteuerten Werkzeugmaschinen, bestehend aus einer auf einer Lochrasterplatte oder einen Nutentisch befestigbaren Grundplatte, auf der mindestens eine Anlagebacke und mindestens zwei Zwischenspannbacken, fixierbar sind.

Aus der EP-A-0'328'792 ist eine Mehrfachaufspannvorrichtung bekannt, die aus zwei Anlagebacken und mehreren dazwischen angeordneten Zwischenspannbacken besteht, wobei in der einen Anlagebacke ein Führungsachsenpaar gelagert ist, während die Zwischenspannbacken und die zweite endseitige Anlagebacke längsverschiebbar auf dem Führungsachsenpaar gelagert sind. Beide Anlagebacken und die Zwischenspannbacken werden jeweils mit Schrauben und Nutensteine am Nutentisch der Werkzeugmaschine befestigt. Alle Zwischenspannbacken und die endseitige Anlagebacken bestehen je aus einer festen Anschlagbacke und einer verschieblichen Spannbacke. Die verschieblichen Spannbacken lassen sich längs einer Keilspannschräge axial bewegen.

Ferner ist auf dem Markt eine Mehrfachaufspannvorrichtung, der Firma Röhm Spanntechnik AG, erhältlich. Diese Vorrichtung besteht aus einer leistenförmigen Grundplatte mit einer zahnstangenförmigen Rasterung und einer mittigen T-Nut. Zentrisch in der T-Nut ist eine Befestigungsbohrung vorgesehen, sowie eine zweite Bohrung, die in eine Querfixiernut mündet, die senkrecht zur T-Nut verlaufend in der Grundfläche der Grundplatte eingelassen ist. Sowohl die Anlagebacke, wie auch die Anschlagbacke der Zwischenspannbacke weisen auf ihrer Grundfläche eine gleiche Verzahnung, wie die Grundplatte auf und lassen sich so entsprechend der Zahnrasterung an verschiedenen Stellen der Grundplatte formschlüssig aufsetzen und wiederum mittels Schrauben und Nutensteine auf die Grundplatte fixieren. Bei dieser Ausführung wird mit lediglich einer Anlagebacke und mehreren Zwischenspannbacken gearbeitet. Die Zwischenspannbacken bestehen auch hier jeweils aus einer unteren Anschlagbacke und einer oberen, verschieblichen Spannbacke. Die Spannung erfolgt hier durch die vertikale Zugkraft einer Schraube, wobei die Spannbacke mit einer Schrägfläche an einer entsprechenden Schrägfläche der Anschlagbacke entlang gleitet, wodurch eine axiale Verschiebungskomponente auftritt.

Eine weitere Spannvorrichtung mit einer verzahnten Grundplatte und einer entsprechenden Verzahnung der Halteelemente ist aus WO-A-8904236 (nächstliegender Stand der Technik) bekannt. In dieser Vorrichtung können mehrere identische Halteelemente formschlüssig an, durch die Verzahnung vorgegebenen, Positionen auf der Grundplatte fixiert werden. Beim Aufspannen eines Werkstückes wirken jeweils eine feste Anschlagbacke eines Halteelementes und eine horizontal bewegliche Spannbacke des zweiten Halteelementes zusammen. Mehrere Werkstücke können in einer solchen Vorrichtung nacheinander bearbeitet werden, da jedem Werkstück ein neuer Koordinaten-Nullpunkt zugewiesen werden kann. Ausgehend von diesen Koordinaten-Nullpunkten, die von der Werkzeugmaschine angefahren werden, kann das Bearbeitungsprogramm jeweils neu gestartet werden, ohne dass die Maschine in ihre Ausgangsposition zurückkehren muss.

Mehrfachaufspannvorrichtungen sind insbesondere geeignet, um mehrere gleiche Werkstücke auf einer NC-gesteuerten Werkzeugmaschine gleichzeitig zu bearbeiten. Moderne NC-gesteuerte Werkzeugmaschinen haben mehrere, meistens sechs einstellbare Koordinaten-Nullpunkte. Von diesen Koordinaten-Nullpunkten ausgehend werden programmierte Bearbeitungsvorgänge abgefahren. Bei den bekannten Mehrfachaufspannvorrichtungen wurde für jedes aufgespannte Werkstück ein neuer Koordinaten-Nullpunkt verwendet. Dies war erforderlich, weil der Abstand zwischen zwei auf derselben Mehrfachaufspannvorrichtung aufgespannte Werkstücke ein nicht definiertes Mass bildete. Auch gewisse systembedingte, teilweise nur geringe Fehler würden sich ansonsten summieren.

Die vorliegende Erfindung hat sich daher die Aufgabe gestellt, eine Mehrfachspannvorrichtung der eingangs genannten Art zu schaffen, bei der der Abstand zwischen jeweils zwei auf derselben Mehrfachaufspannvorichtung aufgespannten Werkstücke exakt definiert ist, so dass jede Spannbackenfläche jeder Zwischenspannbacke jeweils einen neuen Hilfsnullpunkt für die NC-gesteuerte Werkzeugmaschine definiert.

Diese Aufgabe löst eine Mehrfachaufspannvorrichtung mit den Merkmalen des Patentanspruches 1. Weitere vorteilhafte Ausgestaltungsformen gehen aus den abhängigen Patentansprüchen hervor und deren Bedeutung ist in der nachfolgenden Beschreibung erläutert.

In der beiliegenden Zeichnung ist ein bevorzugtes Ausführungsbeispiel des Erfindungsgegenstandes dargestellt und anhand der nachfolgenden Beschreibung erklärt. Es zeigt:
- Figur 1: die erfindungsgemässe Mehrfachaufspannvorrichtung in einer Zusammenstellungszeichnung in Seitenansicht;
- Figuren 2A - 2C: die Anschlagbacke eines Zwischenspannbackens in drei verschiedenen Ansichten und
- Figuren 3A - 3C: die obere, verschiebliche Spannbacke der Zwischenspannbacke.

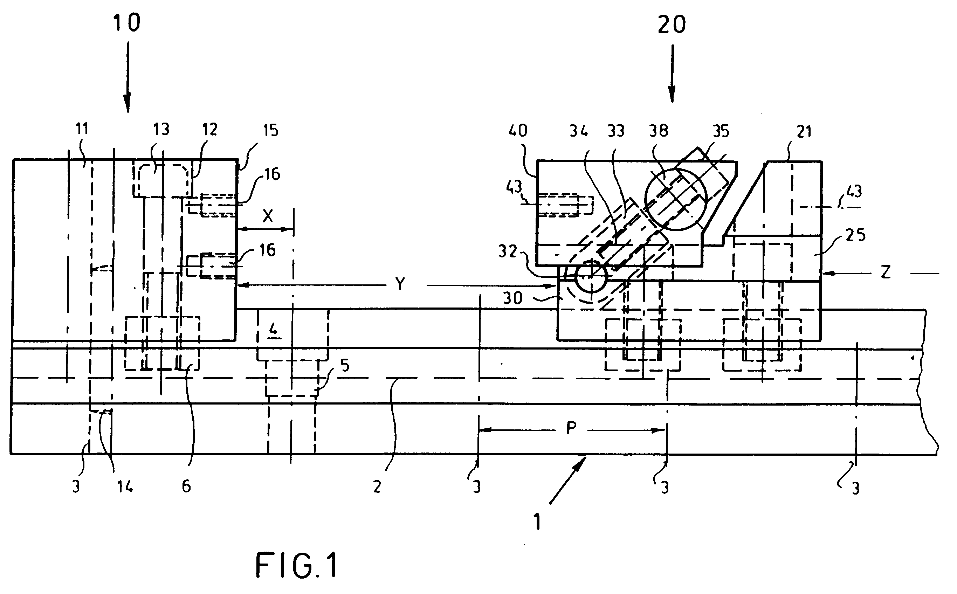

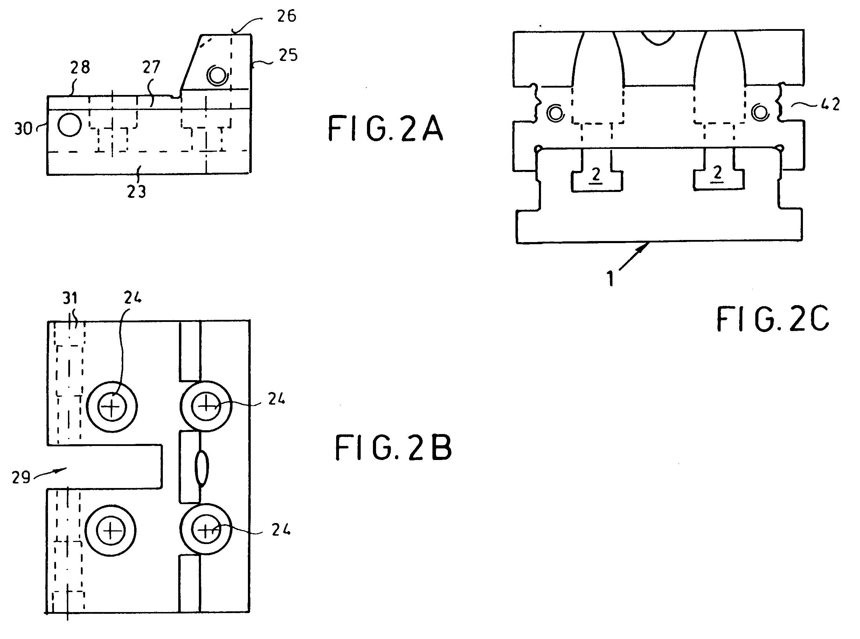

In der Zusammenstellungszeichnung gemäss der Figur 1 erkennt man alle Hauptbestandteile der Mehrfachaufspannvorrichtung und deren massliches Zusammenwirken. Die Hauptbestandteile der Vorrichtung bilden die Grundplatte 1, die an einem Ende darauf befestigte Anlagebacke 10 und die verschieblich auf der Grundplatte 1 fixierbare Zwischenspannbacke 20. Die Grundplatte 1 hat die Form einer Leiste, in der zwei parallele Längsnuten 2 (siehe Figur 2C) eingelassen sind. In der Figur 1 ist lediglich die Grundfläche, der im Querschnitt T-förmigen Längsnuten 2, strichliniert angedeutet. Zwischen den beiden axialen, parallelen Längsnuten 2 sind mehrere Positionierungsbohrungen 3 angebracht. Der Achsabstand P zwischen zwei benachbarten Positionierungsbohrungen 3 entspricht einem festgelegten Raster, welches dem Raster der Lochrasterplatte auf der Werkzeugmaschine entspricht. Jede Positionierungsbohrung 3 hat oben einen erweiterten Schraubenkopfaufnahmebereich 4, der in einen engeren Zentrierbereich 5 mündet, an dem die hochgenaue Positionierungsbohrung 3 anschliesst. In der Zeichnung ist lediglich eine Positionierungsbohrung exakt dargestellt, während die übrigen Positionierungsbohrungen lediglich durch ihre Mittenachse angedeutet sind.

In der Figur 1 der Zeichnung links ist auf der Grundplatte 1 eine Anlagebacke 10 dargestellt. Die Anlagebacke 10 besteht im wesentlichen aus einem massiven Stahlklotz, der hochpräzise geschliffen ist. Dieser wird durch drei Bohrungen durchsetzt. Für die exakte Positionierung ist eine Präzisionsbohrung 11 vorgesehen, welche auf die Positionierungsbohrung 3 in der Grundplatte 1 ausgerichtet ist und in der ein Spannstift 14 zur Bildung der formschlüssigen Verbindung zwischen der Anlagebacke 10 und der Grundplatte 1 eingesetzt ist. Zwei in der Seitenansicht exakt hintereinander liegende Halterungsbohrungen 12 sind auf die beiden Längsnuten 2 ausgerichtet. In den Halterungsbohrungen 12 befinden sich Fixierschrauben 13, die in T-förmigen Nutensteine 6 eingeschraubt sind. Hierdurch wird auch noch die kraftschlüssige Verbindung zwischen der Grundplatte 1 und der Anlagebacke 10 sichergestellt. Die auf die benachbarte Zwischenspannbacke 20 ausgerichtete Stirnfläche der Anlagebacke 10 bildet die Spannbackenfläche 15. Zur Erzielung exakt wiederholbarer Hilfsnullpunkte, gemäss Aufgabe der Erfinung, muss die Distanz X zwischen dieser Spannbackenfläche 15 der Anlagebacke 10 und dem Zentrum der davor liegenden Positionierungsbohrung 3 in der Grundplatte 1 exakt definiert sein. Dies ergibt sich aber automatisch, wenn die Positionierungsbohrungen 3 in der Grundplatte 1 und die Distanz zwischen dem Zentrum der Präzisionsbohrung in der Anlagebacke und der Spannbackenfläche 15 exakt stimmen.

Falls besonders niedrige Werkstücke eingespannt werden müssen, so kann man auf die Grundplatte 1 noch Parallelstücke einlegen, die sich dank Sacklochbohrungen 16 am Anlagebacken 10 und entsprechende Sacklochbohrungen 43 in den Zwischenspannbacken in eine exakter Höhenposition halten lassen.

Die Zwischenbacke 20 besteht einerseits aus einer auf der Grundplatte 1 fixierbaren Anschlagbacke 21 und einer verschieblichen Spannbacke 22. Die Verbindung zwischen der Anschlagbacke 21 und der verschieblichen Spannbacke 22 erfolgt durch mehrere Elemente. Die Anschlagbacke 21 ist in den Figuren 2A-C detailliert dargestellt. Sie hat die Form eines exakt auf die Masse der Grundplatte ausgerichteten Schlittens. Entsprechend der leistenförmigen Gestalt der Grundplatte 1 ist im Boden eine kanalförmige Vertiefung 23 eingelassen. Vier Befestigungsbohrungen 24 mit Schraubenkopfaufnahmeraum sind auf die Längsnuten 2 der Grundplatte 1 ausgerichtet. Die Stirnfläche eines erhöhten Bereiches 26 bildet die Spannbackenfläche 25 der Anschlagbacke 21. Der niedrigere Bereich der Anschlagbacke 21 ist oben zu einer Gleitfläche 28 und stirnseitig zu einer Anlagefläche 30 geschliffen. Ein mittiger Schlitz 29, der in der Längsrichtung der Grundplatte 1 verläuft, ist schräg nach oben verlaufend in der Anschlagbacke 21 eingelassen. Eine senkrecht zum Schlitz 29 verlaufende, über diesen hinweg, quer durch die Anschlagbacke 21 verlaufende Querbohrung 31 dient zur Aufnahme einer Drehachse 32. Im mittigen Schnitt 29 auf der Drehachse 32 lagert ein Zugstück 33. Das Zugstück 33 weist eine Sacklochbohrung 34 mit Innengewinde auf, in die eine Schraube 35 eingreift. Mittels dieser Schraube 35 lässt sich diese verschiebliche Spannbacke 22, welche auf der Gleitfläche 28 der Anschlagbacke 21 ruht, in axialer Richtung verschieben.

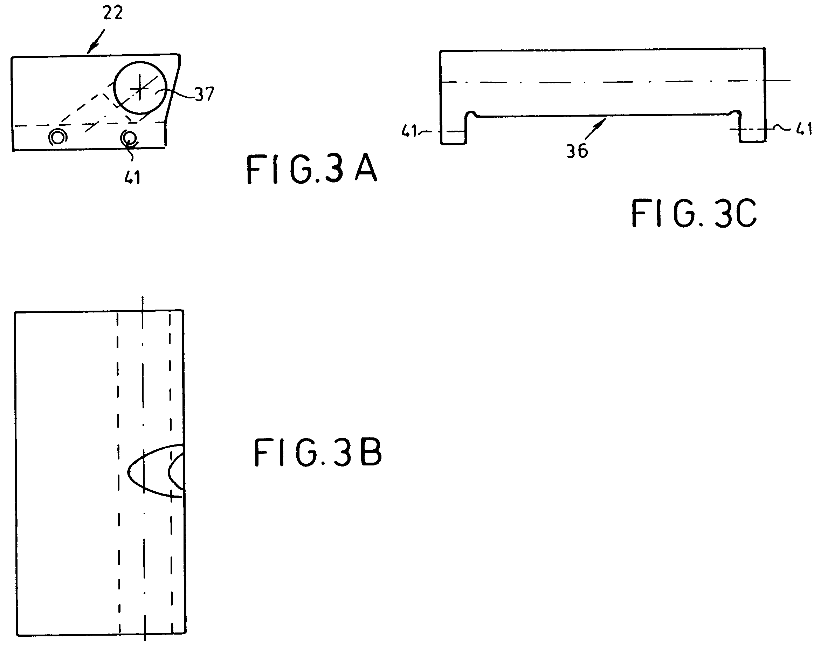

Die Spannbacke 22 ist in den Figuren 3A-C im Detail dargestellt. Auch ihre Grundfläche weist eine kanalförmige Ausnehmung 36, welche so dimensioniert ist, dass sie den niedrigeren Bereich 27 der Anschlagbacke 21 exakt zu umgreifen vermag. Eine Querbohrung 37 mit relativ grossem Durchmesser durchsetzt die Spannbacke 22 und dient zur Aufnahme eines darin drehbaren gelagerten Druckbolzens 38. Der Druckbolzen 38 wird von einer Radialbohrung durchsetzt, durch welche die vorgenannte Schraube 35 hindurchgeführt ist. Zieht man die Schraube 35 an, so wird der Druckbolzen 38 zur Drehachse 32 hingezogen, wodurch das Zugstück 33 und die Schraube 34 eine Schwenkbewegung, bezüglich der Drehachse 32, durchführt und die verschiebliche Spannbacke 22 zur fixen Anlagebacke 10 bewegt wird. Damit bewegt sich die Andruckfläche 40 der Spannbacke 22 zur Spannbackenfläche 15 hin. Dies ermöglicht einen relativ grossen Spannweg der Spannbacke 22. Entsprechend geschieht dies zwischen einer ersten Zwischenspannbacke und einer zweiten Zwischenspannbacke 20. Allerdings bewegt sich nun die Andruckfläche 40 der Spannbacke 22 nicht mehr auf die Spannbackenfläche 15 der Anlagebacke 10 zu, sondern nähert sich der Spannbackenflächen 25 der ersten Zwischenspannbacke 20. Die Spannbackenfläche 25 der Zwischenspannbacke 20 ist nun ebenfalls eine fixe Fläche, da die Anschlagbacke 21 mit Hilfe von Nutsteinen 6 auf die Grundplatte 1 gehalten ist.

Um einerseits die Schrauben zum Befestigen der Anschlagbacke 21 auf der Grundplatte 1 zu ermöglichen und andererseits mit dem Endmass zur Anlagefläche 30 zugelangen, schwenkt man die obere Spannbacke 22 der Zwischenspannbacke 20 nach oben. Nach der exakten Einstellung klappt man die Spannbacke wieder hinunter. Damit man weiss, dass die Spannbacke 22 in der korrekten Lage ist, sind seitlich in der Spannbacke 22 federnde Druckstücke 41 eingesetzt. Diese haben die Form von Hohlschrauben, in denen eine federbelastete Kugel lagert. In der Endstellung der Spannbacke 22 rasten diese Kugeln in längsverlaufenden Prismen 42 in der Anschlagbacke 21 ein.

Nachfolgend ist nun die Benützung der erfindungsgemässen Mehrfachaufspannvorrichtung noch kurz beschrieben. Nachdem die Anlagebacke 10 auf der Grundplatte 1 fest montiert ist, kann die Spannbackenfläche 15 als Koordinaten-Nullpunkt der Maschine festgelegt werden. Nun nimmt man ein genormtes Endmass, welches etwas grösser als das zu bearbeitende Werkstück ist und legt es auf die Grundplatte 1 zwischen der Anlagebacke 10 und der Zwischenspannbacke 20. Nun presst man die Zwischenbacke 20 auf das eingelegte Endmass in Richtung zur Anlagebacke 10 hin, bis dieses haargenau, sowohl an der Spannbackenfläche 15 der Anlagebacke 10, wie auch an der Anlagefläche 30 der Anschlagbacke 21 anliegt. Sodann zieht man die Schrauben, mit denen die Anschlagbacke 21 auf der Grundplatte 1 fixiert werden, an. Das Endmass definiert somit die Distanz Y, welche somit ein Normmass ist. Weil nun aber auch die Länge der Anschlagbacke 21 ein bekanntes und vorzugsweise genormtes Mass ist, bindet sich die Spannbackenfläche 25 der Anschlagbacke 21 an einem genau vorher kalkulierbaren Ort, so dass nun die Spannbackenfläche 25 als Hilfsnullpunkt eingegeben werden kann. Genau gleich verfährt man zwischen zwei benachbarten Zwischenspannbacken 20. Die so definierte Distanz Z wird auch wieder durch ein Endmass festgelegt. In den meisten Fällen werden die Distanzen Y und Z identisch sein. Somit lassen sich auf der erfindungsgemässen Mehrfachaufspannvorrichtung mehrere Werkstücke hintereinander einspannen und das Bearbeitungsprogramm kann an mehreren, vorher bereits bekannten Stellen, den sogenannten Hilfsnullpunkten immer wieder neu gestartet werden. So lassen sich beispielsweise mit fünf solcher Mehrfachaufspannvorrichtungen an jedem maschineneigenen Koordinaten-Nullpunkt das Bearbeitungsprogramm starten und danach zum Beispiel vier auf einer Grundplatte fixierte Werkstücke nacheinander bearbeiten, so dass insgesamt das Bearbeitungsprogramm auf demselben Maschinentisch zwanzigmal hintereinander ablaufen kann. Hierdurch lässt sich auch optimal mit dem bekannten Palettsystem arbeiten.

## Patentansprüche

1. Mehrfachaufspannvorrichtung zum Aufspannen von zu bearbeitenden Werkstücken auf NC-gesteuerten Werkzeugmaschinen, bestehend aus einer auf einer Lochrasterplatte oder einem Nutentisch befestigbaren Grundplatte (1), auf der mindestens eine Anlagebacke (10) und mindestens zwei Zwischenspannbacken (20) fixierbar sind, wobei die Grundplatte (1) die Form einer Leiste aufweist, in der zwei parallele Längsnuten (2) eingelassen sind und ferner die Zwischenspannbacke (20) eine auf die Grundplatte fixierbare, untere Anschlagbacke (21) aufweist, auf der eine verschiebliche Spannbacke (22) gleitet, wobei die Anschlagbacke (21) eine zur Anlagebacke (10) gerichtete Anlagefläche (30) und auf der gegenüberliegenden Seite eine fixe Spannbackenfläche (25) aufweist, dadurch gekennzeichnet, dass zwischen den Längsnuten (2) der Grundplatte (1) entsprechend der Rasterung der Lochrasterplatte eine Reihe Positionierungsbohrungen (3) angebracht sind, wobei die Anlagebacke (10) eine sie durchsetzende Bohrung (11) aufweist, die mit einem Loch in der Grundplatte fluchtet und mittels einem entsprechenden Stift (14) auf dieser definiert positionierbar ist, und dass die Distanz (X) zwischen der Spannbackenfläche (15) der Anlagebacke und dem Zentrum der davor liegenden Positionierungsbohrung (3) in der Grundplatte (1) definiert ist, und dass jeweils die Distanz (Y,Z) zwischen der Spannbackenfläche (15) der Anlagebacke (10) und der Anlageflache (30) der Zwischenspannbacke (20), sowie zwischen der Spannbackenfläche (25) der Zwischenspannbacke (20) und der Anlagefläche (30) der nächsten Zwischenspannbacke (20) mittels eines Endmasses einstellbar ist, wodurch jede Spannbackenfläche (15,25) einen neuen Hilfsnullpunkt für die NC-gesteuerte Werkzeugmaschine definiert, wobei die Lage der Hilfsnullpunkte vor dem Start eines Bearbeitungsprogrammes bekannt ist.

2. Mehrfachaufspannvorrichtung nach Anspruch 1, dadurch gekennzeichnet, dass in der Spannbackenfläche (15) der Anlagebacke (10) Sacklochbohrungen (16) vorgesehen sind, zur kraft- und formschlüssigen Verbindung von Parallelstücke, womit eine exakte Höhenpositionierung der Werkstücke zwischen der Anlagebacke (10) und der benachbarten Zwischenspannbacke (20) ermöglicht ist.

3. Mehrfachaufspannvorrichtung nach Anspruch 1, dadurch gekennzeichnet, dass in der Spannbackenflächen (25,40) der Anschlagbacke (21) und der Spannbacke (22) der Zwischenspannbacke (20) Sacklochbohrungen (43) zur kraft- und formschlüssigen Verbindung von Parallelstücke aufweist, womit eine exakte Höhenpositionierung der Werkstücke zwischen zwei benachbarten Zwischenspannbacken (20) ermöglicht ist.

4. Mehrfachaufspannvorrichtung nach Anspruch 1, dadurch gekennzeichnet, dass im Anschlagbacken (21) des Zwischenbackens (20) eine senkrecht zur Längsrichtung und parallel zur Oberfläche der Grundplatte verlaufende Drehachse (32) gelagert ist, auf den mittig ein Zugstück (33) mit Gewindeloch schwenkbar lagert, und dass in der verschieblichen Spannbacke (22) der Zwischenbacke (20) ein parallel zur Drehachse verlaufender drehbar gelagerter Druckbolzen (38) angeordnet ist, der mittig diametral von einer Bohrung durchsetzt ist, durch der eine Schraube (35) hindurch in das Gewindeloch des Zugstückes (33) ragt, so dass mittels der Schraube (35) die Distanz zwischen Drehachse (32) und Druckbolzen (38) veränderbar ist, wobei das Zugstück schwenkt und die verschiebliche Spannbacke (22) auf einer Gleitfläche der Anschlagbacke (21) der Zwischenbacke (20) gleitet.

5. Mehrfachaufspannvorrichtung nach Anspruch 4, dadurch gekennzeichnet, dass an der seitlichen Längsfläche der Anschlagbacke längsverlaufende Prismen (42) eingelassen sind, in die die Kugeln von Federdruckstücke (41), die in der verschieblichen Spannbacke (22) eingelassen sind, einschnappen, wenn die verschiebliche Spannbacke (22) vollständig auf der Gleitfläche der Anschlagbacke (21) aufliegt.

6. Mehrfachaufspannvorrichtung nach Anspruch 4, dadurch gekennzeichnet, dass die Anschlagbacke (21) der Zwischenspannbacke (20) mittels mindestens je einer Schraube, die in Nutensteine (6) in den Längsnuten (2) der Grundplatte (1) eingreifen, auf der Grundplatte kraftschlüssig gehalten ist.

7. Mehrfachaufspannvorichtung nach Anspruch 6, dadurch gekennzeichnet, dass die Anschlagbacke (21) mit vier Schrauben kraftschlüssig auf der Grundplatte (1) gehalten ist, wobei im Gebrauchszustand zwei Schrauben unterhalb der verschieblichen Spannbacke (22) liegen.

## Claims

1. Multiple work-holding device for gripping workpieces to be machined on numerically controlled (NC) machine tools, comprising a baseplate (1) fixable on a grid-drilled plate or grooved table, on to which baseplate at least one locating jaw (10) and at least two intermediate clamping jaws (20) are fixable, the baseplate (1) having the form of a rail in which to parallel longitudinal grooves (2) are formed and the intermediate clamping jaw (20) having, in addition, a lower locating jaw (21) fixable to the baseplate, on which locating jaw a movable clamping jaw (22) slides, the locating jaw (21) having a locating face (30) facing towards the locating jaw (10) and, on the opposite side, a fixed clamping jaw face (25), characterised in that a number of positioning holes (3) are drilled between the longitudinal grooves (2) of the baseplate (1) corresponding to the grid of the drilled plate, the locating jaw (10) having a hole (11) passing through it and aligned with a hole in the baseplate and positionable on it in a defined way by means of a corresponding pin (14), and in that the distance (X) between the clamping jaw face (15) of the locating jaw and the centre of the positioning hole (3) in the baseplate (1) located in front of it is defined, and in that the distances (Y,Z) between the clamping jaw face (15) of the locating jaw (10) and the locating face (30) of the intermediate clamping jaw (20), and between the clamping jaw face (25) of the intermediate clamping jaw (20) and the locating face (30) of the adjacent intermediate clamping jaw (20), are in each case adjustable by means of a stop measure, so that each clamping jaw face (15,25) defines a new additional zero point for the NC machine tool, the position of the additional zero points being known before the start of a machining program.

2. Multiple work-holding device according to Claim 1, characterised in that blind holes (16) are drilled in the clamping jaw face (15) of the locating jaw (10) to enable parallel pieces to be connected non-positively and positively, so that exact vertical positioning of the workpieces between the locating jaw (10) and the adjacent intermediate clamping jaw (20) is made possible.

3. Multiple work-holding device according to Claim 1, characterised in that [it] has blind holes (43) in the clamping jaw faces (25,40) of the locating jaw (21) and of the clamping jaw (22) of the intermediate clamping jaw (20) to enable parallel pieces to be connected non-positively and positively, so that exact vertical positioning of workpieces between two adjacent intermediate clamping jaws (20) is made possible.

4. Multiple work-holding device according to Claim 1, characterised in that a pivot pin (32) running perpendicularly to the longitudinal direction and parallel to the surface of the baseplate is located in the locating jaw (21) of the intermediate clamping jaw (20), at the centre of which pin a pull-bar (33) with a threaded hole is pivoted, and in that a push-pin (38) running parallel to the pivot axis (32) is pivotally mounted in the movable clamping jaw (22) of the intermediate jaw (20), which push-pin has a hole passing diametrally through its centre, through which hole a screw (35) projects into the threaded hole of the pull-bar (33), so that the distance between the pivot pin axis (32) and the push-pin (38) is alterable by means of the screw (35), the pull-bar pivoting and the movable clamping jaw (22) sliding on a slide-face of the locating jaw (21) of the intermediate jaw (20).

5. Multiple work-holding device according to Claim 4, characterised in that longitudinal V-section detents (42) are formed in the lateral longitudinal face of the locating jaw, in which detents spring-loaded balls (41) recessed in the movable clamping jaw (22) engage when the movable clamping jaw (22) rests fully on the slide-face of the locating jaw (21).

6. Multiple work-holding device according to Claim 4, characterised in that the locating jaw (21) of the intermediate clamping jaw (20) is held non-positively on the baseplate by means of at least one screw [which] engage in sliding blocks (6) in the longitudinal grooves (2) in the baseplate (1).

7. Multiple work-holding device according to Claim 6, characterised in that the locating jaw (21) is held non-positively on the baseplate (1) by four screws, two screws being located below the movable clamping jaw (22) in the operational state.

## Revendications

1. Dispositif de serrage multiple pour le serrage de pièces à usiner sur des machines-outils à commande numérique, constitué d'un socle (1) pouvant être fixé sur une plaque à trame de trous ou une table rainurée et sur lequel au moins un mors de marge (10) et au moins deux mors de serrage intermédiaires (20) peuvent être fixés en position, le socle (1) ayant la forme d'une barre dans laquelle sont pratiquées deux rainures longitudinales parallèles (2) et, en outre, le mors de serrage intermédiaire (20) présentant un mors de butée inférieur (21) pouvant être fixé sur le socle et sur lequel coulisse un mors de serrage mobile (22), le mors de butée (21) présentant une face d'application (30) dirigée vers le mors de marge (10) et, sur le côté opposé, une face fixe de mors de serrage (25), **caractérisé** en ce qu'une rangée de perçages de positionnement (3) est pratiquée entre les rainures longitudinales (2) du socle (1) conformément à la trame de la plaque à trame de trous, le mors de marge (10) présentant un perçage (11) qui le traverse, perçage qui s'aligne avec un perçage du socle et, au moyen d'une goupille correspondante (14), peut être positionné de manière définie sur ce socle, et en ce que la distance (X) entre la face de mors de serrage (15) du mors de marge et le centre du perçage de positionnement (3) du socle (1) qui se trouve devant elle est définie, et en ce que la distance (Y) entre la face de mors de serrage (15) du mors de marge (10) et la face d'application (30) du mors de serrage intermédiaire (20), ainsi que la distance (Z) entre la face de mors de serrage (25) du mors de serrage intermédiaire (20) et la face d'application (30) du mors de serrage intermédiaire suivant (20) peuvent être respectivement réglées au moyen d'une cale étalon, de sorte que chaque face de mors de serrage (15, 25) définit un nouveau point origine auxiliaire pour la machine-outil à commande numérique, la position des points origines auxiliaires étant connue avant le démarrage d'un programme d'usinage.

2. Dispositif de serrage multiple selon la revendication 1, **caractérisé** en ce que des perçages borgnes (16) sont prévus dans la face de mors de serrage (15) du mors de marge (10) pour l'assemblage par blocage et engagement positif d'étalons parallèles, ce qui permet un positionnement vertical précis des pièces entre le mors de marge (10) et le mors de serrage intermédiaire voisin (20).

3. Dispositif de serrage multiple selon la revendication 1, **caractérisé** en ce que des perçages borgnes (43) sont prévus dans les faces de mors de serrage (25, 40) du mors de butée (21) et du mors de serrage (22) du mors de serrage intermédiaire (20) pour l'assemblage par blocage et engagement positif d'étalons parallèles, ce qui permet un positionnement vertical précis des pièces entre deux mors de serrage intermédiaires voisins (20).

4. Dispositif de serrage multiple selon la revendication 1, **caractérisé** en ce qu'un axe de rotation (32) s'étendant perpendiculairement à la direction longitudinale et parallèlement à la surface du socle est monté dans le mors de butée (21) du mors intermédiaire (20), axe sur lequel un élément de traction (33) à trou taraudé est monté centralement à pivotement, et en ce qu'un boulon de pression (38), monté à rotation et s'étendant parallèlement à l'axe de rotation, est disposé dans le mors de serrage mobile (22) du mors intermédiaire (20), boulon qui est traversé diamétralement en position centrale par un perçage à travers lequel une vis (35) pénètre dans le trou taraudé de l'élément de traction (33), de sorte que la distance entre l'axe de rotation (32) et le boulon de pression (38) peut être modifiée au moyen de la vis (35), l'élément de traction pivotant alors, tandis que le mors de serrage mobile (22) coulisse sur une face de glissement du mors de butée (21) du mors intermédiaire (20).

5. Dispositif de serrage multiple selon la revendication 4, **caractérisé** en ce que des prismes (42) s'étendant longitudinalement sont pratiqués dans la face longitudinale latérale du mors de marge, prismes dans lesquels les billes d'éléments de pression à ressort (41) qui sont insérés dans le mors de serrage mobile (22) s'enclenchent lorsque le mors de serrage mobile (22) repose complètement sur la face de glissement du mors de butée (21).

6. Dispositif de serrage multiple selon la revendication 4, **caractérisé** en ce que le mors de butée (21) du mors de serrage intermédiaire (20) est maintenu par blocage sur le socle au moyen d'au moins deux vis qui s'engagent respectivement dans des écrous en T (6) introduits dans les rainures longitudinales (2) du socle (1).

7. Dispositif de serrage multiple selon la revendication 6, **caractérisé** en ce que le mors de butée (21) est maintenu par blocage sur le socle (1) au moyen de quatre vis, deux vis se trouvant, dans l'état d'utilisation, en dessous du mors de serrage mobile (22).
